# FASCICULE DE BREVET EUROPEEN

(11) **EP 1 818 130 B1**
(45) Date de publication et mention de la délivrance du brevet: **22.07.2009**
(21) Numéro de dépôt: 07290161.4
(22) Date de dépôt: 08.02.2007
(51) Int. Cl.: B23K 26/18, F01D 25/24

(54) **Procédé de découpe par faisceau laser d'un ajour dans une plaque métallique avec l'aide d'une plaque de protection présentant aussi un ajour**
Verfahren zum Schneiden einer Öffnung in einer metallischen Platte mit einem Laserstrahl mit Hilfe einer eine Öffnung aufweisenden Schutzplatte
Process of laser cutting an opening in a metallic plate using a protection plate having also an opening

(30) Priorité: 09.02.2006 FR 0650460
(43) Date de publication de la demande: 15.08.2007
(73) Titulaire: SNECMA, 75015 Paris (FR)
(72) Inventeur: Bourdin, Dominique, 91750 Chevannes (FR); Sardou, Thierry, 94410 Saint Maurice (FR); Margonty, Jérôme, 91170 Viry Chatillon (FR)
(74) Mandataire: Bloch, Gérard

(56) Documents cités:
- JP-A- 7 136 792
- JP-A- 10 043 880
- JP-A- 2005 177 786
- US-A- 4 948 331
- US-A- 5 667 708

## Description

La présente invention concerne le domaine de la découpe de pièces métalliques au moyen d'un faisceau laser, CO2 par exemple, plus particulièrement, un procédé de découpe d'au moins un premier ajour par faisceau conformément au préambule de la revendication 1 (voir, par example, US 4948331).

Pour la fabrication de certaines pièces métalliques à géométrie complexe mettant en oeuvre des moyens d'usinage ou de découpe, on est amené à mettre au point des procédés spécifiques. C'est le cas pour la fabrication d'un carter de distribution de fluide moteur répondant à des spécifications particulières dans une turbomachine telle qu'un moteur à turbine à gaz.

Le carter en question est de forme générale tronconique sur la face interne duquel on fixe deux viroles coaxiales dont les diamètres sont peu différents. A proximité du bord libre de la virole extérieure d'une part et de la virole intérieure d'autre part, on découpe des ouvertures pour permettre le montage d'ailettes fixes de distribution de fluide. Ces ouvertures sont alignées radialement par deux.

Le problème posé est celui de la découpe des ouvertures sur la virole intérieure.

Plusieurs techniques ont été envisagées mais présentent des inconvénients :

Le procédé EDM par exemple est long et engendre un coût de revient de la pièce important. En outre, il pose des problèmes de métallurgie nécessitant un reconditionnement obligatoire.

La découpe par fil, par son encombrement, n'est pas adaptée à la géométrie de la pièce, et la durée engendre un coût de revient important.

L'emploi d'un jet d'eau est de mise en oeuvre délicate dans la mesure où la virole extérieure est susceptible d'être détériorée pendant la découpe de la virole intérieure. En outre on constate un manque de précision.

Le poinçonnage est également difficile à mettre en oeuvre en raison de la proximité des deux viroles.

La technique laser est avantageuse par sa précision et sa rapidité de découpe mais il se pose le problème d'éviter la détérioration de la virole extérieure quand le faisceau, ayant traversé la paroi de la virole intérieure est arrêté par la paroi de la virole extérieure. La virole extérieure est détériorée aussi bien par les impacts du faisceau laser que par les projections de métal en fusion.

La mise en place d'un simple protecteur en métal résistant à la longueur d'onde du faisceau CO2 entre les deux viroles n'est pas satisfaisante car celui-ci ne peut éviter les rétroprojections de métal en fusion sur la surface arrière de la virole intérieure.

L'emploi de cire dans cet environnement ne donne pas satisfaction non plus car celle-ci passe rapidement de l'état solide à l'état liquide et est éjectée par le gaz accompagnant le laser laissant la virole extérieure sans protection.

Le brevet US 4948331 décrit un procédé de découpe de deux ajours par faisceau laser. Le brevet JP 2005 177786 décrit la réalisation d'ajour dans un tube présentant des ajours opposés. Une plaque de protection avec une ouverture a été employée, l'ouverture de la plaque de protection est alignée sur l'ajour à créer, mais décalée vers l'extérieur. L'ouverture de la plaque de protection est plus grande que l'ajour déjà créé.

Le déposant s'est donc fixé comme objectif de mettre au point un procédé de découpe résolvant ce problème.

Le procédé de découpe, conforme à l'invention, d'au moins un premier ajour par faisceau laser dans une première plaque métallique en présence d'une seconde plaque métallique disposée parallèlement, à faible distance de la première plaque et présentant un deuxième ajour dont le contour est au droit du contour de l'ajour à découper, où l'on dispose entre les deux plaques, pendant la découpe, une plaque formant moyen de protection d'épaisseur déterminée et présentant un troisième ajour de contour décalé vers l'intérieur par rapport au contour du deuxième ajour.

Grâce à l'invention, on supprime les rétroprojections de métal en fusion car celui-ci est évacué à travers les ajours de la plaque de protection et de la deuxième plaque. En outre, le faisceau est arrêté et son énergie résiduelle absorbée par le protecteur. On observe aussi que la découpe ne présente pas de bavure en sortie du faisceau. Ce procédé permet encore de limiter l'étendue de la zone affectée thermiquement. On a pu déterminer qu'elle était inférieure à 0,05 mm.

Le procédé s'applique en particulier à la découpe d'une plaque dans un assemblage dont la première plaque est en alliage à base Nickel.

Le problème se pose notamment quand la distance entre les deux plaques est inférieure à 15 mm.

De préférence la plaque de protection est en métal à base d'aluminium, et son épaisseur est comprise entre 0,5 et 1,5 mm, notamment 1 mm.

On a constaté que pour parvenir à une protection efficace, dans le cas d'ajours de dimensions de l'ordre de 30 mm en longueur et de 2 mm en largeur, le décalage entre le contour du troisième ajour sur la plaque de protection par rapport au contour du deuxième ajour sur la deuxième plaque devait être inférieure à 0,5 mm, de préférence entre 0,2 et 0,3 mm., notamment 0,25mm.

Dans l'application particulière envisagée, les deux plaques sont, la première, une virole intérieure et, la deuxième, une virole extérieure montées coaxialement à l'intérieur d'un carter de turbomachine. Plus particulièrement, les ajours ménagés sur les viroles forment des logements pour des ailettes de distributeur.

On décrit maintenant plus en détail, un mode de réalisation non limitatif du procédé de l'invention en référence aux dessins sur lesquels
La figure 1 représente un carter de distribution de turbomachine en coupe axiale en cours de découpe ;
La figure 2 montre en détail une partie de la figure 1 ;
La figure 3 montre une vue partielle de plaques en plan avec les ajours ;
La figure 4 montre une vue en plan partielle de la plaque de protection.

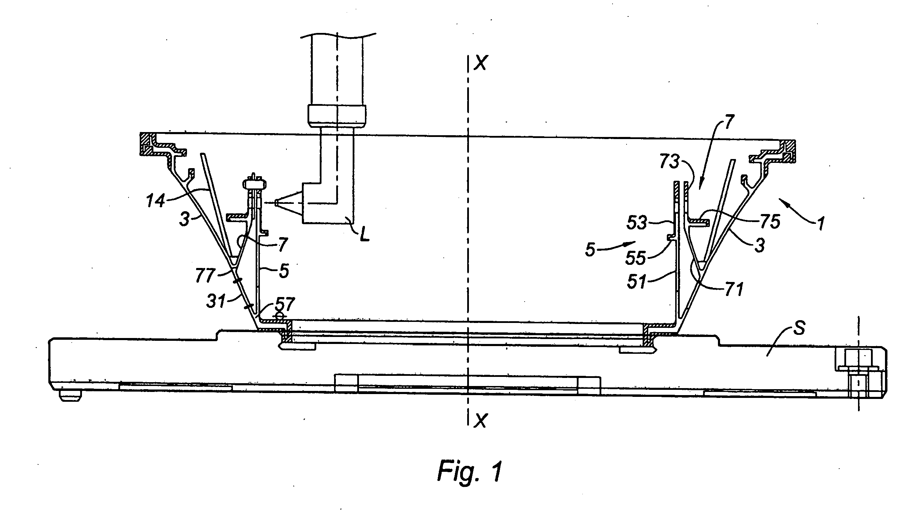

L'invention est appliquée au montage des éléments d'un carter de distribution haute pression de moteur à turbine à gaz. Il s'agit de l'organe de stator disposé en aval de la chambre de combustion du moteur, comportant un canal annulaire recevant les gaz de combustion de la chambre de combustion et assurant leur guidage de manière à alimenter la roue de turbine haute pression disposée axialement en aval d'un étage d'ailettes de distribution placées à son extrémité. Sur la figure 1, le carter 1 en cours de fabrication est fixé sur un support S de manière à permettre les différentes opérations d'usinage et d'assemblage.

Le carter comprend une partie 3 globalement tronconique d'axe XX. On soude ou on usine sur celle-ci les divers éléments qui forment ensemble une pièce du stator de la turbomachine. Le carter comprend en particulier deux viroles 5 et 7 coaxiales ménageant entre elles un canal annulaire d'axe XX pour les gaz de combustion issus de la chambre de combustion. Le canal annulaire communique d'un côté avec des orifices 31 percés dans la paroi de la partie tronconique 3. Le canal est convergent sur une certaine longueur, entre les portions 51 et 71 des deux viroles, puis devient cylindrique. Cette dernière partie est définie par deux portions cylindriques 53 et 73. Les deux viroles comprennent des raidisseurs transversaux, 55 et 75 respectivement. Les bords libres 53L et 73L des deux portions cylindriques 53 et 73 sont situés dans un même plan perpendiculaire à l'axe XX. Sur le moteur une roue de turbine HP est disposée en regard du canal et reçoit les gaz de combustion qui ont transité dans celui-ci. Des ailettes de distributeur sont montées radialement entre les deux portions cylindriques 53 et 73 ; elles viennent se loger entre les ajours ménagés, dans les deux portions 53 et 73, et alignés radialement par deux.

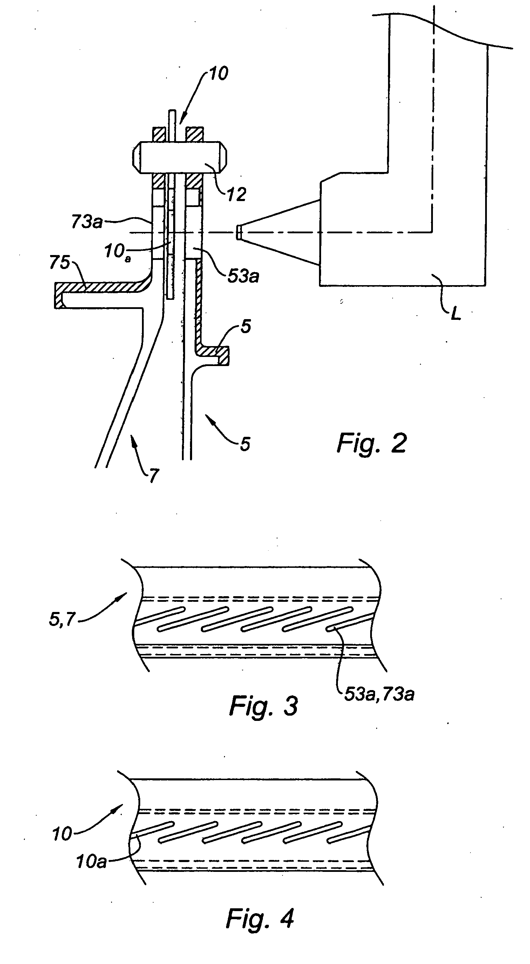

Selon l'application considérée ici les ajours 53a et 73a, respectivement, comme on le voit sur la figure 3, ont une forme sensiblement rectangulaire avec des bords rectilignes longs inclinés par rapport à l'axe XX ; reliés par des bords en arrondis.

Les viroles sont soudées sur la face interne de la partie tronconique en 57 et 77 respectivement.

L'assemblage du carter comprend les étapes suivantes. La virole extérieure 7 est d'abord rapportée sur le carter et soudée en 77 puis les ajours 73a sont découpés sont le motif de la figure 3 au moyen d'un appareil de découpe par faisceau laser, il s'agit ici de laser de type CO2 mais d'autres sont susceptibles de convenir. La tête de découpe laser L est représentée sur les figures 1 et 2. Elle est supportée et commandée par des moyens non représentés mais connus en soi. Lorsque cette première opération est terminée, on rapporte et on soude la virole 5 sur le carter le long de la ligne 57. La position relative des deux viroles est déterminée en fonction des considérations liées à la fabrication du moteur et définies par ailleurs.

Pour les applications envisagées, la différence de rayon entre les deux viroles en 53 et 73 est inférieure à 15 mm ; elle est pratiquement de l'ordre de 4 à 5 mm . Pour la découpe des ajours 53a, on pilote de la même façon la tête de découpe L.

En raison du faible espacement entre les deux viroles, on rencontre les problèmes présentés plus haut. Les contraintes géométriques : le métal en fusion projeté par le gaz de découpe n'a pas le temps de refroidir, le faisceau ne dispose pas de l'espace suffisant pour diverger et perdre en densité d'énergie, les contraintes métallurgiques et les contraintes liées à la nuance/état/épaisseur de la matière à découper, imposent l'emploi d'une lentille de focalisation (7,5 pouces) avec point de focalisation situé en sortie de matière, d'où la conservation d'une densité d'énergie forte avec divergence insuffisante du faisceau et génération d'impacts de fusion du faisceau laser en l'absence de toute protection.

Conformément à l'invention on dispose un moyen 10 de protection entre les deux viroles 5 et 7. Ce moyen est en forme de virole ou de plaque selon que les éléments 5 et 7 sont des viroles ou des plaques.

Selon le présent exemple, la différence de diamètre entre les deux viroles est de 4,1 mm. L'épaisseur du moyen de protecteur 10 est de 1 mm et il est placé à une distance de 2,6 mm en arrière de la première virole.

Ce moyen de protection 10 a pour fonction d'absorber l'énergie résiduelle du faisceau en sortie de découpe de la virole intérieure pour protéger les ajours de la virole extérieure 7 et également d'empêcher les rétroprojections de métal fondu sur la virole intérieure. On parvient à ce résultat en ménageant, conformément à l'invention, des ajours 10a qui sont alignés avec les ajours 73a, existants au moment de la découpe, et 53a, à découper. Ces ajours 10a, conformément à l'invention, visibles sur la figure 4, s'en distinguent par le fait qu'ils sont légèrement plus petits que les ajours 53a et 73a, visibles sur la figure 3. Leur contour est de ce fait décalé vers l'intérieur par rapport au contour de l'ajour 73a et le masquent. Par exemple pour des ajours 53a et 73a de dimension 27,9 mm en longueur et 2 mm en largeur, on ménage dans le moyen de protection des ajours de 27,4 mm de long et de 1,5 mm de large. Le contour des ajours sur le moyen de protection est décalé de 0,25 mm +/- 0,05mm.

Le moyen de protection est maintenu entre les deux viroles par des pions 12, par exemple trois répartis à 120° dans le cas de viroles.

Le procédé permet une évacuation du métal en fusion à travers les ajours 10a du moyen 10 de protection en passant par les ajours 73a de la virole extérieure 7. Un écran de protection 14 est placé en arrière de la deuxième virole pour protéger le carter.

Après la découpe, on observe une absence d'impacts du faisceau laser. Le profil des ajours du moyen de protection permet de protéger les ajours de la virole extérieure (pas de dépôt de métal fondu sur la tranche ou de trace de fusion de faisceau), et d'absorber l'énergie résiduelle liée au faisceau. Par ailleurs les spécifications métallurgiques sont respectées. La zone affectée thermiquement est inférieure à 0,05 mm. On ne perçoit aucune bavure.

## Revendications

1. Procédé de découpe d'au moins un premier ajour (53a) par faisceau laser dans une première plaque métallique (5) en présence d'une seconde plaque métallique (7) disposée parallèlement, à faible distance de la première plaque (5) et présentant un deuxième ajour (73a) dont le contour est au droit du contour de l'ajour (53a) à découper, **caractérisé par le fait que** l'on dispose entre les deux plaques (5 et 7) une plaque formant moyen de protection (10) d'épaisseur déterminée et présentant un troisième ajour (10a) aligné avec le deuxième ajour (73a), légèrement plus petit que le deuxième ajour de telle sorte que le contour du troisième ajour (10a) est décalé vers l'intérieur par rapport au contour du deuxième ajour (73a).

2. Procédé selon la revendication précédente dont la première plaque est en alliage à base Nickel.

3. Procédé selon la revendication 1 ou 2 dont la distance entre les deux plaques est inférieure à 15 mm.

4. Procédé selon l'une des revendications précédentes dont la plaque formant moyen de protection est en métal à base d'aluminium, d'épaisseur comprise entre 0,5 et 1,5 mm.

5. Procédé selon l'une des revendications précédentes dont le décalage entre le contour du troisième ajour (10a) sur le moyen de protection (10) par rapport au contour du deuxième ajour (73a) sur la deuxième plaque (5) est inférieur à 0,5 mm, de préférence entre 0,2 et 0,3 mm., notamment 0,25mm.

6. Procédé selon l'une des revendications précédentes dont les deux plaques (5 et 7) sont une virole intérieure et une virole extérieure montées coaxialement à l'intérieur d'un carter de turbomachine.

7. Procédé selon la revendication précédente dont les ajours ménagés sur les viroles forment des logements pour des ailettes de distributeur.

## Claims

1. Method of cutting at least a first perforation (53a) by laser beam in a first metal plate (5) in the presence of a second metal plate (7) disposed parallel, at a short distance from the first plate (5), and having a second perforation (73a) the contour of which is in line with the contour of the perforation (53a) to be cut, **characterised by** the fact that there is disposed between the two plates (5 and 7) a plate forming a protection means (10) with a given thickness and having a third perforation (10a) aligned with the second perforation (73a), slightly smaller than the second perforation so that the contour of the third perforation (10a) is offset towards the inside with respect to the contour of the second perforation (73a).

2. Method according to the preceding claim, wherein the first plate is made from a nickel-based alloy.

3. Method according to claim 1 or 2, wherein the distance between the two plates is less than 15 mm.

4. Method according to one of the preceding claims, wherein the plate forming a protection means is made from a metal based on aluminium, with a thickness of between 0.5 and 1.5 mm.

5. Method according to one of the preceding claims, wherein the offset between the contour of the third perforation (10a) on the protection means (10) with respect to the contour of the second perforation (73a) on the second plate (5) is less than 0.5 mm, preferably between 0.2 and 0.3 mm, especially 0.25 mm.

6. Method according to one of the preceding claims, wherein the two plates (5 and 7) are an internal ferrule and an external ferrule mounted coaxially inside a turbomachine casing.

7. Method according to the preceding claim, wherein the perforations provided on the ferrules form housings for distributor blades.

## Patentansprüche

1. Verfahren zum Schneiden von mindestens einer Öffnung (53a) mittels Laserstrahl in einer ersten Metallplatte (5), wobei eine zweite Metallplatte (7) vorhanden ist, die parallel in geringem Abstand zu der ersten Platte angeordnet ist und eine zweite Öffnung (73a) aufweist, deren Kontur sich gerade gegenüber der auszuschneidenden Öffnung (53a) befindet,
**dadurch gekennzeichnet,**
**dass** zwischen den beiden Platten (5 und 7) eine Platte angeordnet wird, die ein Schutzmittel (10) von bestimmter Stärke bildet und eine dritte Öffnung (10a) aufweist, welche auf die zweite Öffnung (73a) ausgerichtet ist und ein wenig kleiner ist als die zweite Öffnung, so dass die Kontur der dritten Öffnung (10a) gegenüber der Kontur der zweiten Öffnung (73a) nach innen versetzt ist.

2. Verfahren nach dem vorherigen Anspruch, wobei die erste Platte aus einer Legierung auf Nickelbasis besteht.

3. Verfahren nach Anspruch 1 oder 2, wobei der Abstand zwischen den beiden Platten weniger als 15 mm beträgt.

4. Verfahren nach einem der vorherigen Ansprüche, wobei die Platte, die das Schutzmittel bildet, aus einem Metall auf Aluminiumbasis besteht und eine Stärke von 0,5 bis 1,5 mm hat.

5. Verfahren nach einem der vorherigen Ansprüche, wobei der Versatz der Kontur der dritten Öffnung (10a) auf dem Schutzmittel (10) gegenüber der Kontur der zweiten Öffnung (73a) auf der zweiten Platte (7) weniger als 0,5 mm beträgt, vorzugsweise zwischen 0,2 und 0,3 mm, insbesondere 0,25 beträgt.

6. Verfahren nach einem der vorherigen Ansprüche, wobei die beiden Platten (5 und 7) einen inneren Ring und einen äußeren Ring darstellen, die koaxial im Inneren eines Gehäuses einer Turbomaschine sitzen.

7. Verfahren nach dem vorherigen Anspruch, wobei die Öffnungen, die an den Ringen ausgeführt sind, Aufnahmen für Leitflügel bilden.
